# EUROPEAN PATENT APPLICATION

(11) **EP 4 040 641 A1**
(43) Date of publication of application: **10.08.2022**
(21) Application number: 20871503.7
(22) Date of filing: 18.09.2020
(51) Int. Cl.: H02K 1/02, H02K 1/14

(54) **MOTOR**

(30) Priority: 30.09.2019 JP 2019181000
(71) Applicant: Daikin Industries, Ltd., Osaka-shi, Osaka 530-8323 (JP)
(72) Inventor: KIDO, Naohiro, Osaka-shi, Osaka 530-8323 (JP); KAYANO, Akane, Osaka-shi, Osaka 530-8323 (JP); ASANO, Yoshinari, Osaka-shi, Osaka 530-8323 (JP); ASARI, Tsukasa, Osaka-shi, Osaka 530-8323 (JP); HIBINO, Hiroshi, Osaka-shi, Osaka 530-8323 (JP)
(74) Representative: Goddar, Heinz J.
(86) International application number: PCT/JP2020/035629
(87) International publication number: WO 2021/065586

(57) **Abstract**

A technique that improves cooling performance of a motor including an iron core formed of a powder magnetic core is provided. A motor 1 according to one embodiment of the present disclosure includes a stator iron core 211 formed of a powder magnetic core and an inserting member 24 disposed so as to face at least a portion of a wall surface of the stator iron core 211, the inserting member being configured to enable heat to be transferred in an axial direction. The motor 1 includes a heat dissipation member 40 configured to enable the heat from the inserting member 24 to be transferred in the axial direction. The motor 1 includes a fixing member 30 that fixes the iron core 211 and the inserting member 24. Stress generated between the stator iron core 211 and the inserting member 24 is less than each of stress generated between the stator iron core 211 and the fixing member 30, and stress generated between the inserting member 24 and the fixing member 30. Each of the inserting member 24 and the stator iron core 211 is configured to enable the heat to be transferred.

## Description

### [Technical Field]

The present disclosure relates to a motor.

### [Background Art]

For example, a motor is known in which a powder magnetic core is used as an iron core (core) material (see Patent Document 1).

### [Related-Art Document]

### [Patent Document]

[Patent Document 1] Japanese Patent No. 4887128

### [Summary]

### [Problem to be Solved by the Invention]

However, the powder magnetic core has relatively low strength. If the powder magnetic core is fixed by an interference fit, with press-fitting or shrink-fitting of a housing, a shaft member, or the like, there may be a possibility that the powder magnetic core gets damaged due to tensile stress acting on an iron core in a radial direction. Therefore, as in Patent Document 1, when the iron core is fixed in a manner in which brackets hold the iron core at both ends of the motor, heat is dissipated through only the ends of the motor in an axial direction. Thus, improvements may be made from a viewpoint of cooling performance.

An object of the present disclosure is to provide a technique that improves cooling performance of a motor including an iron core formed of a powder magnetic core.

### [Means to Solve the Problem]

In one embodiment of the present disclosure, a motor is provided, and the motor includes:
an iron core formed of a powder magnetic core;
an axial heat-transfer member disposed so as to face at least a portion of a wall surface of the iron core, the axial heat-transfer member being configured to enable heat to be transferred in an axial direction;
a heat dissipation member configured to enable the heat from the axial heat-transfer member to be transferred in the axial direction; and
a fixing member that fixes the iron core and the axial heat-transfer member,
wherein stress generated between the iron core and the axial heat-transfer member is less than each of stress generated between the iron core and the fixing member, and stress generated between the axial heat-transfer member and the fixing member, and
wherein each of the axial heat-transfer member and the iron core is configured to enable the heat to be transferred.

According to the present embodiment, for example, by a clearance fit or the like, a clearance is formed between an iron core and an axial heat-transfer member. Even when stress generated between the iron core and the axial heat-transfer member is relatively small, heat can escape from the iron core to be transferred toward the axial heat-transfer member. Thus, the heat generated through the iron core that is formed of a powder magnetic core is dissipated from a heat dissipation member via the axial heat-transfer member. Therefore, cooling performance of a motor including the iron core that is formed of the powder magnetic core can be improved.

In the above embodiment, an object may be provided between an axial heat-transfer member and an iron core, the object being configured to enable heat to be transferred.

In the above embodiment, an object contacts at least one end surface of an iron core in an axial direction and may be disposed to enable heat from the iron core to be transferred in the axial direction, an object being configured to transfer the heat from the iron core to an axial heat-transfer member.

In the above embodiment, an object may be formed of a non-magnetic body.

In the above embodiment, an object may be resin, an adhesive, or grease that is provided in a space between an iron core and an axial heat-transfer member that face each other.

In the above embodiment, resin, an adhesive, or grease may include a thermally conductive filler.

In the above embodiment, an axial heat-transfer member may be configured to enable heat to be transferred by contact with an iron core, in a state in which the axial heat-transfer member deforms relatively greatly in comparison with the iron core that deforms.

In the above embodiment, a motor may be configured to be driven in accordance with armature currents of a plurality of phases.

### [Effect of the Invention]

According to the embodiments described above, a technique that improves cooling performance of a motor including an iron core formed of a powder magnetic core can be provided.

### [Brief Description of Drawings]

[Fig. 1] Fig. 1 is a perspective view of the outline of a claw pole motor according to a first embodiment to a third embodiment;
[Fig. 2] Fig. 2 is a perspective view of an example of a stator configuration according to the first embodiment to the third embodiment;
[Fig. 3] Fig. 3 is an exploded view of an example of the configuration of a stator unit according to the first embodiment to the third embodiment;
[Fig. 4] Fig. 4 is a longitudinal-sectional view of an example of the configuration of the claw pole motor according to the first embodiment;
[Fig. 5A] Fig. 5A is a diagram for describing another example of a method for assembling the claw pole motor (stator) according to the first embodiment;
[Fig. 5B] Fig. 5B is a diagram for describing yet another example of the method for assembling the claw pole motor (stator) according to the first embodiment;
[Fig. 6A] Fig. 6A is a cross-sectional view of another example of the configuration of an inserting member according to the first embodiment;
[Fig. 6B] Fig. 6B is a cross-sectional view of yet another example of the configuration of the inserting member according to the first embodiment; [Fig. 7] Fig. 7 is a longitudinal sectional view of an example of the configuration of the claw pole motor according to the second embodiment;
[Fig. 8A] Fig. 8A is a longitudinal sectional view of an example of the configuration of the inserting member according to the third embodiment; and [Fig. 8B] Fig. 8B is a cross-sectional view of another example of the configuration of the inserting member according to the third embodiment.

### [Mode for carrying out the invention]

Embodiments will be described with reference to the drawings.

### [First embodiment]

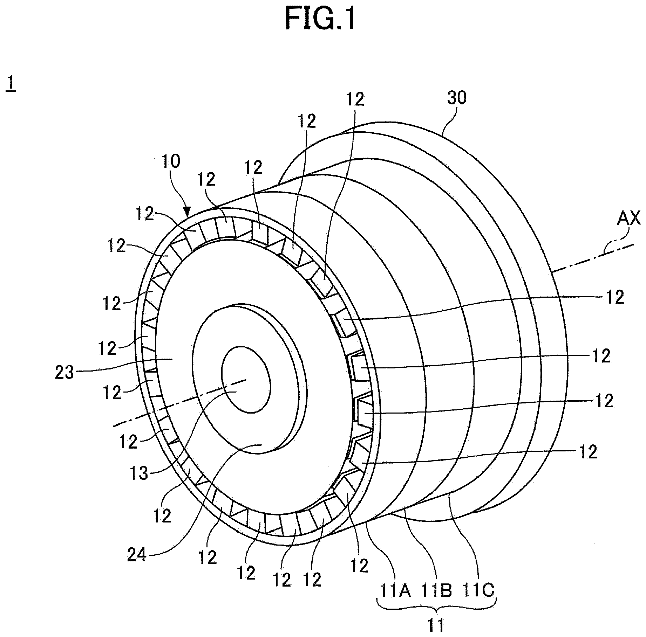

A first embodiment will be described with reference to Figs. 1 to 6.

### <Basic configuration of motor>

First, the basic configuration of a motor 1 according to the present embodiment will be described with reference to Figs. 1 to 3.

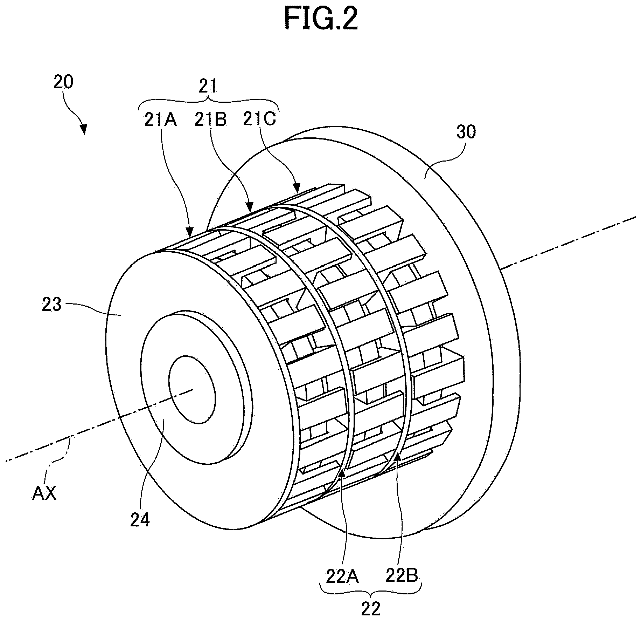

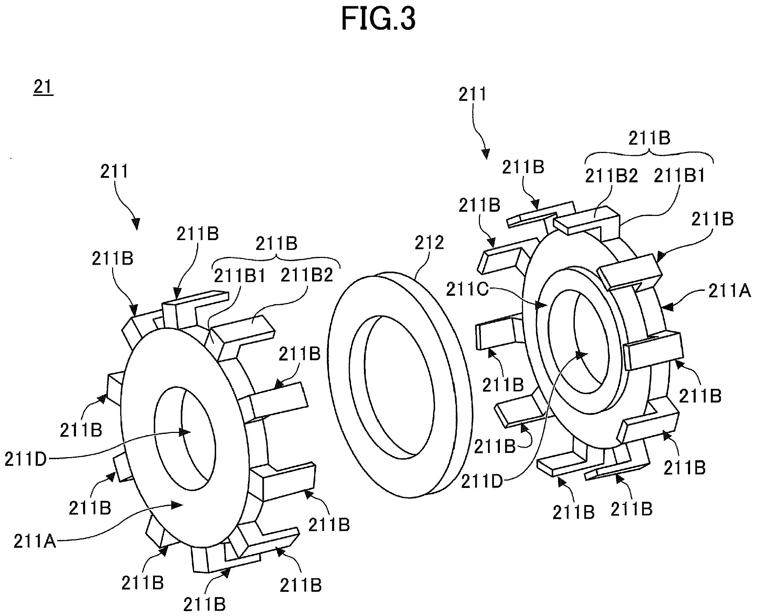

Fig. 1 is a perspective view of the outline of a claw pole motor (hereinafter, simply referred to as a "motor") 1 according to the first embodiment. Fig. 2 is a perspective view of an example of the configuration of a stator 20 according to the first embodiment. Specifically, Fig. 2 is a diagram illustrating the motor in Fig. 1 from which a rotor 10 (a rotor iron core 11, permanent magnets 12, and a rotary shaft member 13) is removed. Fig. 3 is an exploded view of an example of the configuration of a stator unit 21 according to the first embodiment.

In Fig. 1, illustration of a coupling member 14 described below is omitted.

As illustrated in Fig. 1, the motor 1 (which is also referred to as an "electric motor") is an outer rotor type and is driven in accordance with armature currents of a plurality of phases (in this example, three phases). For example, the motor 1 is mounted on a compressor, a fan, or the like of an air conditioner.

As illustrated in Figs. 1 and 2, the motor 1 includes the rotor 10, a stator 20, and a fixing member 30.

As illustrated in Fig. 1, the rotor (which is also referred to as a "rotor") 10 is disposed farther outward than the stator 20, in a radial direction (hereafter simply referred to as the "radially") of the motor 1. The rotor 10 is configured to be rotatably about a rotation axis AX. The rotor 10 includes a rotor iron core 11, a plurality of (20 magnets in this example) of permanent magnets 12, and a rotary shaft member 13.

The rotor iron core (which is also referred to as a "rotor iron core") 11 has, for example, an approximately cylindrical shape and is arranged such that the rotation axis AX of the motor 1 and an axis of a cylindrical shape are substantially the same. The rotor iron core 11 has the length that is substantially the same as that of the stator 20, in an axial direction of the motor 1 (hereinafter simply referred to as the "axially"). The rotor iron core 11 may be formed of, for example, a steel plate, cast iron, a powder magnetic core, or the like. The rotor iron core 11 may be composed of, for example, one member in the axial direction. The rotor iron core 11 may also consist of a plurality of (in this example, three) rotor iron cores 11A to 11C that are stacked axially, as illustrated in Fig. 1.

The plurality of (in this example, 20) permanent magnets 12 are equally spaced apart on an inner peripheral surface of the rotor iron core 11 in a circumferential direction. Each of the permanent magnets 12 is formed so as to be present substantially between one end and another end of the rotor iron core 11. Each permanent magnet 12 is, for example, a neodymium sintered magnet or a ferrite magnet.

Each of the permanent magnets 12 has, at both ends, different magnetic poles created by magnetization in a radial direction. For two permanent magnets 12 that are next to each other in a circumferential direction and are among the plurality of permanent magnets 12, each permanent magnet has different magnetic poles created by magnetization that are each formed on the inner side of the permanent magnet that faces the stator 20 in the radial direction. With this arrangement, given permanent magnets 12 each of which has an N-pole created by magnetization on the inner side of the magnet in the radial direction, as well as given permanent magnets 12 each of which has an S-pole created by magnetization on the inner side of the magnet in the radial direction, are alternately arranged on the radial outer side of the stator 20, when viewed in the circumferential direction of the stator 20.

Each of the permanent magnets 12 may be formed of one magnetic member in the axial direction. Alternatively, the permanent magnets 12 may be formed with a plurality of (e.g., three separate magnetic members that correspond to a number of stacked members of rotor iron core 11) magnetic members that are arranged in the axial direction. In this case, for a plurality of separate magnetic members that are arranged in the axial direction and constitute each permanent magnet 12, the same magnetic poles created by magnetization are formed on inner surfaces of the magnetic members that face the stator 20 in the radial direction.

Instead of the permanent magnets 12 disposed in the circumferential direction, a permanent magnet formed of one member in the circumferential direction may be used, and such a permanent magnet includes, for example, an annular ring magnet, a plastic magnet, or the like. In the annular ring magnet, different magnetic poles created by magnetization are alternately arranged in the circumferential direction. In this case, in the circumferential direction of the rotor, a permanent magnet formed of one member may be formed of one member in the axial direction, and may be entirely formed of one member. Also, in the circumferential direction of the rotor, a permanent magnet formed of one member may be separated into a plurality of members in the axial direction, as in a case in which the plurality of permanent magnets 12 are used. Also, when a plastic magnet formed of one member is adopted with respect to the circumferential direction of the rotor, the rotor iron core 11 may be omitted.

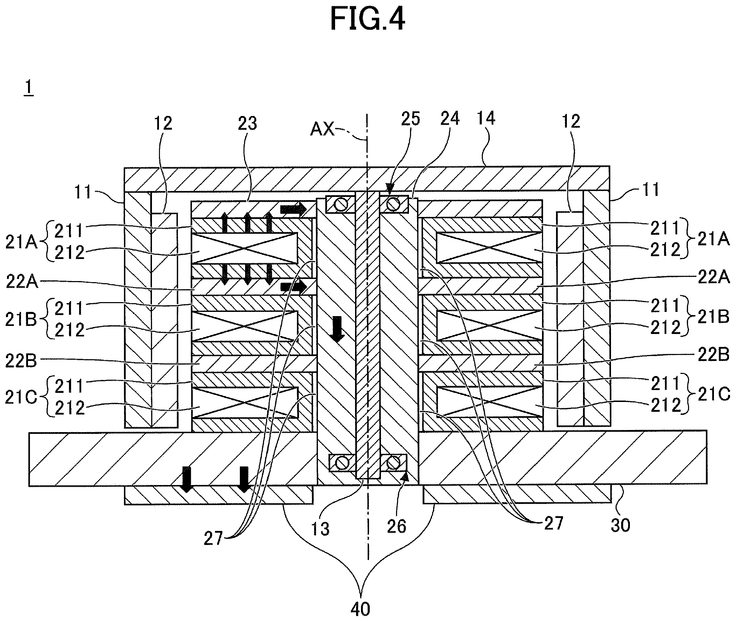

The rotary shaft member 13 has an approximately cylindrical shape, for example, and is disposed such that the rotation axis AX of the motor 1 and an axis of the cylindrical shape are substantially the same. The rotary shaft member 13 is rotatably supported by, for example, bearings 25 and 26 (see Fig. 4 and the like) that are respectively provided at both axial ends of an inserting member 24. As will be described below, the inserting member 24 is fixed to the fixing member 30. With this arrangement, the rotary shaft member 13 can rotate about the rotation axis AX with respect to the fixing member 30. For example, in the axial direction, the rotary shaft member 13 is coupled to the rotor iron core 11 through a coupling member 14 (see Fig. 4 and the like), at an end (hereinafter, referred to as a "distal end of the motor 1" for the sake of convenience) of the motor 1 opposite to an end of the motor 1 on a fixing member 30-side.

The coupling member 14 may have, for example, an approximate disk shape that closes an approximately cylindrical open end of the rotor iron core 11. With this arrangement, the rotor iron core 11 and the permanent magnets 12, which are fixed to an inner peripheral surface of the rotor iron core 11, can rotate about the rotation axis AX of the motor 1 with the fixing member 30, in accordance with the rotation of the rotary shaft member 13.

Instead of the fixing member 30, the rotary shaft member 13 may be rotatably supported, at the distal end of the motor 1, by a housing (not illustrated) via a bearing or the like. In this case, a through-hole through which the rotary shaft member 13 is inserted is omitted in the inserting member 24.

As illustrated in Fig. 2, a stator (also referred to as a "stator") 20 is disposed inside the rotor 10 (rotor iron core 11 and permanent magnets 12) in the radial direction. The stator 20 includes a plurality of (in this example, three) claw pole stator units ("stator units") 21, a plurality of (in this example, two) interphase members 22, an end member 23, and the inserting member 24.

As illustrated in Fig. 3, each stator unit 21 includes a pair of stator iron cores 211 and a winding 212.

The pair of stator iron cores 211 (also referred to as "stator iron cores") is provided to surround the perimeter of winding 212. Each stator iron core 211 is formed of, for example, a powder magnetic core. Each stator iron core 211 includes a yoke 211A, a plurality of claw magnetic poles 211B, a yoke 211C, and an through-hole 211D.

The yoke 211A has an annular shape in an axial view and has a predetermined thickness in the axial direction.

The claw magnetic poles 211B are arranged, at regular intervals, on an outer peripheral surface of the yoke 211A in a circumferential direction. Each claw magnetic pole 211B protrudes outward from the outer peripheral surface of the yoke 211A, in a radial direction. Each claw magnetic pole 211B includes a claw magnetic pole portion 211B1.

The claw magnetic pole portion 211B1 has a predetermined width, and protrudes from the outer peripheral surface of the yoke 211A, by a predetermined length.

The claw magnetic pole 211B further includes a claw magnetic pole portion 211B2. With this arrangement, a relatively large area in which a magnetic pole surface of the claw magnetic pole 211B, which is created by magnetization that is enabled in accordance with an armature current flowing through the winding 212, and the rotor 10 face each other, can be ensured. Therefore, torque of the motor 1 is relatively increased, and the output of the motor 1 can be increased accordingly.

The claw magnetic pole portion 211B2 protrudes from a top end of a corresponding claw magnetic pole portion 211B1, in the axial direction, so as to extend, by a predetermined length, toward another stator iron core in the pair of stator iron cores 211. For example, as illustrated in Fig. 3, each claw magnetic pole portion 211B2 may have a constant width, regardless of a distance from the claw magnetic pole 211B1. Also, for example, the claw magnetic pole portion 211B2 may have a tapered shape in which the width of the claw magnetic pole portion 211B2 is reduced as the claw magnetic pole portion 211B2 is spaced apart from the claw magnetic pole portion 211B1 in the axial direction.

Each claw magnetic pole portion 211B2 may be omitted.

Each yoke 211C is configured such that a yoke portion, proximal to the inner peripheral surface of a corresponding yoke 211A, protrudes, by a predetermined amount, from the inner peripheral surface of the corresponding yoke, toward another stator iron core in the pair of stator iron cores 211. For example, the yoke 211C has a circular shape of which the outer diameter is less than that of the yoke 211A in an axial view. With this arrangement, the stator iron cores 211 forming a pair contact each other, at respective yokes 211C, and a space in which the winding 212 is accommodated is formed between the pair of yokes 211A corresponding to a given pair of stator iron cores 211.

The inserting member 24 is inserted through the through-hole 211D. The through-hole 211D is defined by the inner peripheral surfaces of the yoke 211A and the yoke 211C.

The winding (also referred to as a "coil") 212 is toroidally wound in an axial view. The winding 212 is electrically coupled, at one end, to an external terminal, and another end of the winding is electrically coupled at a neutral point. The winding 212 is disposed, in the axial direction, between the pair of stator iron core 211 (yokes 211A). The winding 212 is wound such that the inner circumferential side of the winding is farther outward than each yoke 211C in the pair of stator iron cores 211 in the radial direction.

As illustrated in Fig. 2, stator iron cores in the pair of stator iron cores 211 are combined such that claw magnetic poles 211B in one stator iron core 211 and claw magnetic poles 211B in another stator iron core 211 are alternately arranged in the circumferential direction. When the armature current flows through the annular winding 212, each claw magnetic pole 211B created by magnetization is formed in the one stator iron core 211 in the pair of stator iron cores 211 to have a different magnetic pole from claw magnetic poles 211B that are created by magnetization and are formed in another stator iron core 211. With this arrangement, in the pair of stator iron cores 211, claw magnetic poles 211B each protruding from one stator iron core 211 are disposed next to each other in the circumferential direction of a corresponding stator iron core, and each claw magnetic pole 211B has a different magnetic pole from claw magnetic poles 211B each of which protrudes from another stator iron core 211. Therefore, when the armature current flows through the winding 212, claw magnetic poles 211B that are N-poles, and claw magnetic poles 211B that are S-poles are alternately disposed in the circumferential direction of the pair of stator iron core 211.

As illustrated in Fig. 2, the plurality of stator units 21 are stacked in the axial direction.

The plurality of stator units 21 include stator units 21 of multiple phases (in this example, three phases). Specifically, the plurality of stator units 21 includes a stator unit 21A of a U-phase, a stator unit 21B of a V-phase, and a stator unit 21C of a W-phase. As the plurality of stator units 21, the stator unit 21A of the U-phase, the stator unit 21B of the V-phase, and the stator unit 21C of the W-phase are stacked in this order when viewed from the distal end of the motor 1. The stator units 21A to 21C are disposed at an offset by an electric angle of 120° in the circumferential direction.

The motor 1 may be driven in accordance with armature currents of two phases, or may be driven in accordance with armature currents of four or more phases.

Each interphase member 22 is provided between given stator units 21 of different phases, and the given stator units 21 are next to each other in the axial direction. The interphase member 22 is, for example, a non-magnetic body. With this arrangement, a predetermined distance between two stator units 21 of different phases is secured and thus magnetic flux leakage between the two stator units 21 of the different phases can be suppressed. The interphase members 22 include a U-V interphase member 22A and a V-W interphase member 22B.

The U-V interphase member 22A is provided between the U-phase stator unit 21A and the V-phase stator unit 21B that are next to each other in the axial direction. The U-V interphase member 22A has an approximately cylindrical shape (approximate disk shape) having a predetermined thickness, for example, and a through-hole through which the inserting member 24 is inserted is formed in a central portion of the U-V interphase member. In the following description, the same configuration may be applied to the V-W interphase member 22B.

The V-W interphase member 22B is provided between the V-phase stator unit 21B and the W-phase stator unit 21C that are next to each other in the axial direction.

The end member 23 is provided at the end of a given stator unit that is among the plurality of stacked stator units 21 and is on a side of the distal end of the motor 1. Specifically, the end member 23 is provided so as to contact the end surface of the stator unit 21A that is opposite a stator surface side facing the stator unit 21B. The end member 23 has an approximately cylindrical shape (approximate disk shape) having a predetermined thickness, for example, and a through-hole through which the inserting member 24 is inserted is formed in the central portion of the end member. The end member 23 is, for example, a non-magnetic body. With this arrangement, magnetic flux leakage from the stator unit 21A (specifically, the stator iron core 211 on a distal end-side of the motor 1) can be mitigated.

The inserting member 24 is fixed, at the top end, to the fixing member 30, in a state in which the inserting member 24 is inserted through the end member 23, the stator unit 21A, the U-V interphase member 22A, the stator unit 21B, the V-W interphase member 22B, and the stator unit 21C in this order when viewed from the distal end of the motor 1. The inserting member 24 has an external thread at the top end, for example, and is fixed to the fixing member 30, by being fastened to a corresponding internal thread of the fixing member 30. Further, the inserting member 24 has an approximately cylindrical shape, for example, and is disposed such that the rotary shaft member 13 is rotatably disposed in a hole formed by the inner peripheral surface of the inserting member. On a distal end-side of the motor 1, the inserting member 24 has a head having a relatively great outer diameter in comparison to the inner diameter of the through-hole 211D in the stator unit 21. With this arrangement, for example, by tightening the inserting member 24 on the fixing member 30 to some extent, a force in a direction from the head of the inserting member to the fixing member 30 can act on the end member 23, in the axial direction. Therefore, the plurality of stator units 21 (stator units 21A to 21C) and interphase members 22 (the U-V interphase member 22A and the V-W interphase member 22B) can be fixed to the fixing member 30 in a manner of being interposed between the end member 23 and the fixing member 30. The powder magnetic core has relatively low strength with respect to tensile stress, while having relatively high strength with respect to compressive stress. Thus, fixing to the stator units 21A to 21C can be performed in a manner in which the compressive stress acts on the stator iron cores 211 that are each formed of the powder magnetic core.

The fixing member 30 has, for example, an approximate disk shape of which the outer diameter is greater than that of the rotor 10 (rotor iron core 11) in a axial view, and has a predetermined thickness in the axial direction. The rotor 10 is rotatably supported by the fixing member 30, through the inserting member 24, and fixing of the stator 20 is performed as described above.

### <Detailed configuration of motor>

Hereafter, the configuration of the motor 1 will be described in detail with reference to Figs. 4 to 6.

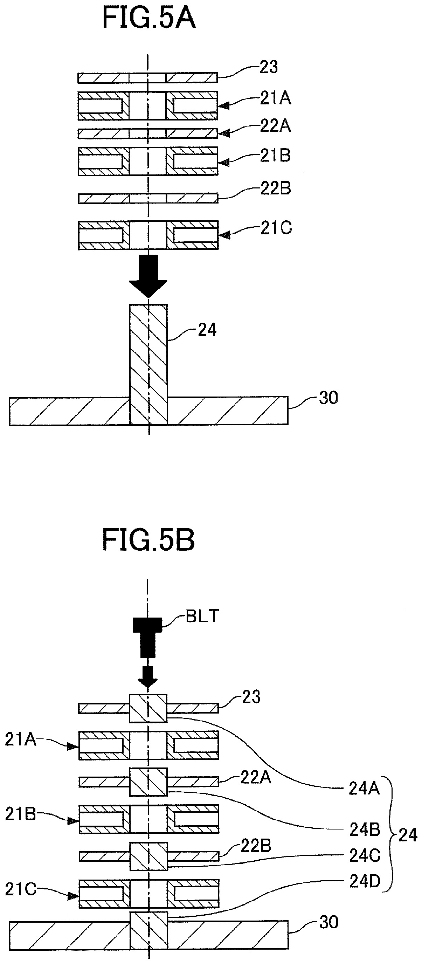

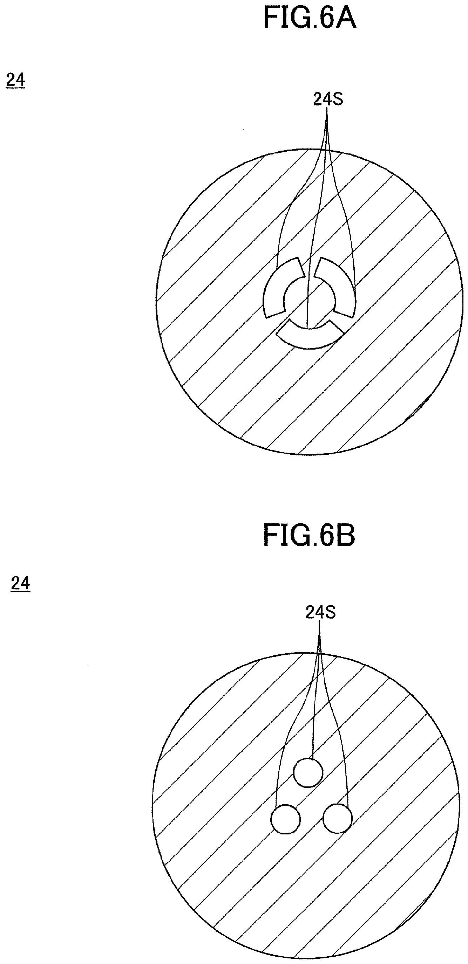

Fig. 4 is a longitudinal cross-sectional view of an example of the configuration of the motor 1 according to the first embodiment. Figs. 5A and 5B are diagrams for describing another example and yet another example of a method for assembling the motor 1 (stator 20) according to the first embodiment, respectively. Figs. 6A and 6B are cross-sectional views of another example and yet another example of the configuration of the inserting member 24 according to the first embodiment, respectively.

Each arrow in Fig. 4 represents the flow of thermal energy. In Fig. 4, illustration of the claw magnetic pole portion 211B2 that is formed in the stator iron core 211 is omitted.

As illustrated in Fig. 4, the U-V interphase member 22A, the V-W interphase member 22B, and the end member 23 are each in contact with the outer peripheral surface of the inserting member 24, at the inner peripheral surface of the through-hole. The U-V interphase member 22A, the V-W interphase member 22B, and the end member 23 are coupled to the inserting member 24 by, for example, press-fitting, shrink-fitting, or the like. Fitting of each of the U-V interphase member 22A, the V-W interphase member 22B, and the end member 23, with the inserting member 24, is enabled by an interference fit, and relatively great stress acts on those members.

The inner peripheries of all of the stator units 21A to 21C (stator iron cores 211) face the outer periphery of the inserting member 24 in the radial direction. A clearance 27 is provided between an inner peripheral surface of an insertion hole in each stator iron core 211 (yoke 211C) in the stator units 21A to 21C and the outer peripheral surface of the inserting member 24. The clearance 27 may have a dimension that is greater than or equal to a fit tolerance that is determined with respect to the stator iron core 211 and the inserting member 24. The stator iron cores 211 of the stator units 21A to 21C are each coupled to the inserting member 24 by a clearance fit, and thus relatively small stress acts on each of the stator iron core and the inserting member. With this arrangement, relatively large tensile stress does not act on each stator iron core 211 that is formed of the powder magnetic core, unlike a case in which the stator iron cores 211 are coupled to the inserting member 24 by an interference fit, and thus a situation where each stator iron core 211 that is formed of the powder magnetic core gets damaged is suppressed.

As described above, when viewed from the distal end-side of the motor 1, the inserting member 24 is inserted through the end member 23, the stator unit 21A, the U-V interphase member 22A, the stator unit 21B, the V-W interphase member 22B, and the stator unit 21C in this sequence, and then the inserting member 24 may be tightened, at the top end, on the fixing member 30. During tightening, the force from the head of the inserting member 24 acts on the end member 23, and thus the stator iron cores 211 of the stator units 21A to 21C are fixed to the fixing member 30 in a manner of being interposed between the end member 23 and the fixing member 30. With this arrangement, relatively great stress is exerted between each stator iron core 211 and the fixing member 30.

As also illustrated in Fig. 5A, before the inserting member 24 is inserted through the end member 23, the stator unit 21A, the U-V interphase member 22A, the stator unit 21B, the V-W interphase member 22B, and the stator unit 21C, the inserting member 24 may be fixed to the fixing member 30. As in the case described above, fixing of the inserting member 24 may be performed in a manner in which the external thread at the top end of the inserting member is tightened on the internal thread of the fixing member 30, or may be performed by press-fitting, shrink-fitting, or the like. With this arrangement, relatively great stress is exerted between the inserting member 24 and the fixing member 30.

In this example, the stator unit 21C, the V-W interphase member 22B, the stator unit 21B, the U-V interphase member 22A, the stator unit 21A, and the end member 23 are inserted through the inserting member 24 in this sequence. In a state in which the end member 23 is fixed to the inserting member 24 by an interference fit, the end member 23 is disposed such that a relatively great force acts on the stator unit 21A in the axial direction. With this arrangement, the axial force from the end member 23 is applied toward the fixing member 30, acts on the stator unit 21A, and thus the stator units 21A to 21C are fixed to the fixing member 30, in a manner of being interposed between the end member 23 and the fixing member 30.

Also, as illustrated in Fig. 5B, the inserting member 24 may be divided into inserting members 24A to 24D that are axially arranged in this order, when viewed from the distal end of the motor 1.

In this example, the end member 23, the U-V interphase member 22A, and the V-W interphase member 22B are preliminarily coupled to inserting members 24A to 24C, respectively, by press-fitting or shrink-fitting, for example. An inserting member 24D is preliminarily fixed to the fixing member 30. As in the case described above, the inserting member 24D may be fixed to the fixing member 30 by tightening the external thread at the top end of the inserting member, on an internal thread of the fixing member 30, or may be fixed to the fixing member 30 by press-fitting, shrink-fitting, or the like.

The stator unit 21C, a coupling portion of the V-W interphase member 22B and the inserting member 24C, the stator unit 21B, a coupling portion of the U-V interphase member 22A and the inserting member 24B, the stator unit 21A, and a coupling portion of the end member 23 and the inserting member 24A are stacked on the fixing member 30 in this sequence. The inserting members 24A to 24D are then coupled together in the axial direction, by a bolt BLT. The end member 23 is disposed such that a relatively great force acts on the stator unit 21A in the axial direction, in a state in which the inserting members 24A to 24D are coupled together by the bolt BLT. With this arrangement, when the axial force from the end member 23 is applied toward the fixing member 30, acts on the stator unit 21A, and thus the stator units 21A to 21C are fixed to the fixing member 30, in a state of being interposed between the end member 23 and the fixing member 30.

The inserting member 24 and the fixing member 30 may be provided as one integral member.

As illustrated in Fig. 4, the inserting member 24 has a hollow shape, and the rotary shaft member 13 is rotatably inserted in the hollow. The rotary shaft member 13 is rotatably supported by the bearings 25 and 26 that are embedded in both ends of the inserting member 24.

Also, as illustrated in Figs. 6A and 6B, the inserting member 24 may not have the hollow shape. In this case, as described above, the rotary shaft member 13 may be rotatably supported, at the distal end of the motor 1, by the housing.

In this example, three slit holes 24S are provided in the inserting member 24 so as to extend in the axial direction. A line, via which an external terminal is coupled to a given winding 212 corresponding to a given unit among the stator units 21A to 21C, is inserted through each slit hole 24S. Each slit hole 24S has any shape. For example, as illustrated in Fig. 6A, each of three slit holes 24S may have an arcuate cross-section that is defined about a central axis of the inserting member 24. Also, for example, as illustrated in Fig. 6B, each of three slit holes 24S may have a circular cross-section that is defined near the central axis of the inserting member 24.

As illustrated in Fig. 4, the clearance 27 is provided between each of the stator iron cores 211 of the stator units 21A to 21C and the inserting member 24 (which is an example of an axial heat-transfer member). With this arrangement, in the motor 1, thermal energy generated through the winding 212 is unlikely to escape from each stator iron core 211, directly via the inserting member 24 in the radial direction.

In contrast, the end member 23 and the U-V interphase member 22A (which are examples of objects) are in contact with the stator iron core 211 (which is an example of an iron core) of the stator unit 21A. The end member 23 and the U-V interphase member 22A are coupled to the inserting member 24 (which is an example of an axial heat-transfer member), by an interference fit. With this arrangement, thermal energy generated through the winding 212 of the stator unit 21A is transferred to the end member 23 and the U-V interphase member 22A, and then the thermal energy is transferred to the inserting member 24 in the radial direction. The inserting member 24 transfers the thermal energy toward the fixing member 30, in the axial direction. The thermal energy transferred to the fixing member 30 is dissipated, in the axial direction, externally through the heat dissipation member 40 that is provided on the fixing member 30. With this arrangement, the thermal energy from each stator iron core 211 can be transferred to the inserting member 24 without relatively great tensile stress being exerted on the stator iron core 211 that is formed of the powder magnetic core. Therefore, thermal resistance of the contact between each stator iron core 211 and the inserting member 24 is reduced, thereby enabling cooling performance of the motor 1 to be improved.

Likewise, the U-V interphase member 22A and the V-W interphase member 22B (which is an example of an object) are each in contact with the stator iron core 211 of the stator unit 21B. Further, the U-V interphase member 22A and the V-W interphase member 22B are each coupled to the inserting member 24 by an interference fit. With this arrangement, thermal energy generated through the winding 212 of the stator unit 21B is transferred to the U-V interphase member 22A and the V-W interphase member 22B and then is axially dissipated externally from the heat dissipation member 40, via the inserting member 24 and the fixing member 30. Therefore, cooling performance of the motor 1 can be improved.

Likewise, the V-W interphase member 22B contacts the stator iron core 211 of the stator unit 21C. The V-W interphase member 22B is coupled to the inserting member 24 by an interference fit. With this arrangement, thermal energy generated through the winding 212 of the stator unit 21C is transferred to the V-W interphase member 22B and is then is axially dissipated externally from the heat dissipation member 40, via the inserting member 24 and the fixing member 30. Therefore, cooling performance of the motor 1 can be improved.

Also, as described above, since the inner peripheral surfaces of all of the stator units 21A to 21C face the outer peripheral surface of the inserting member 24 in the radial direction, thermal energy generated through all of the stator units 21A to 21C can be efficiently transferred to the inserting member 24. In particular, the thermal energy from the stator unit 21B of the V-phase, which is axially located at a middle portion of the stator units 21A to 21C, is relatively hard to escape externally in many cases. With this arrangement, the inserting member 24 is disposed so as to face, in the radial direction, the stator unit 21B associated with a middle phase of the multiple phases, and the stator unit 21B is located at the middle portion of the stator units 21A to 21C in the axial direction. Therefore, cooling performance of the motor 1 can be further improved.

The stator iron core 211 of the stator unit 21C is in contact with the fixing member 30. With this arrangement, thermal energy generated through the winding 212 of the stator unit 21C is transferred to the fixing member 30, and then is dissipated externally from the heat dissipation member 40 in the axial direction. Therefore, cooling performance of the motor 1 can be improved.

At least one of the U-V interphase member 22A, the V-W interphase member 22B, the end member 23, the inserting member 24, or the fixing member 30 may be formed of a non-magnetic material having relatively high thermal conductivity, such as aluminum. With this arrangement, magnetic flux leakage caused between two adjacent stator units 21 of different phases, or magnetic flux leakage caused in each of end-side stator units 21 is mitigated, while enabling thermal energy generated through the winding 212 of each of the stator units 21A to 21C, to be dissipated through the heat dissipation member 40 more efficiently. Therefore, cooling performance of the motor 1 can be further improved.

At least one of the U-V interphase member 22A or the V-W interphase member 22B may be composed of a plurality of members. For example, the at least one of the U-V interphase member 22A or the V-W interphase member 22B may include a first member, which is formed of a non-magnetic body, and a second member having relatively high thermal conductivity, and the second member may also be a non-magnetic body.

The heat dissipation member 40 is provided on the fixing member 30 on a side of a base end of the motor 1. The heat dissipation member 40 may include, for example, a heat dissipation fin or the like. The heat dissipation member 40 may be formed of a material having relatively high thermal conductivity, such as aluminum. With this arrangement, the heat dissipation member 40 can more efficiently dissipate externally thermal energy that is generated through the windings 212 or the like of the motor 1. The heat dissipation member 40 may be provided as an integral member with the fixing member 30. Alternatively, the heat dissipation member 40 is provided as a separate member from the fixing member 30, and the separate member may be attached to the fixing member 30 by any method such as bolting or welding.

The heat dissipation member 40 may be provided, for example, at the end of the inserting member 24 that is on a side of being fixed to the fixing member 30. In this case, thermal energy that is transferred through the inserting member 24 is dissipated directly from the heat dissipation member 40 in the axial direction. In this case, the heat dissipation member 40 may be provided as an integral member with the inserting member 24. Alternatively, the heat dissipation member 40 is provided as a separate member from the fixing member 30, and the separate member may be attached to the inserting member 24 by any method such as bolting or welding.

### [Second embodiment]

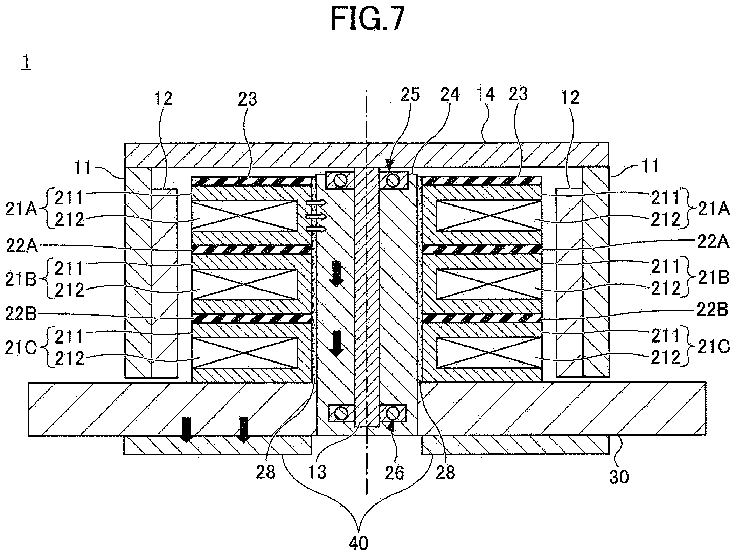

A second embodiment will be described hereafter with reference to Fig. 7. In the following description, portions that differ from those described in the first embodiment will be mainly described, and the description for the same or corresponding components as those described in the first embodiment may be omitted.

As in the first embodiment, the basic configuration of the motor 1 is illustrated in Figs. 1 to 3, and accordingly, the description thereof may be omitted.

### <Detailed configuration of motor>

Fig. 7 is a longitudinal cross-sectional view of an example of the configuration of the motor 1 according to the second embodiment.

As illustrated in Fig. 7, the inner peripheral surfaces of all of the stator units 21A to 21C (stator iron cores 211) face the outer peripheral surface of the inserting member 24 in the radial direction. A clearance is provided between an inner peripheral surface of the insertion hole in each of the stator units 21A to 21C (stator iron cores 211), the U-V interphase member 22A, the V-W interphase members 22B, and the end member 23, and the inserting member 24. As in the clearance 27 described in the first embodiment, the clearance may have a dimension that is greater than or equal to a fit tolerance that is determined with respect to the stator iron core 211 and the inserting member 24. The stator units 21A to 21C (stator iron cores 211), the U-V interphase member 22A, the V-W interphase members 22B, and the end member 23 are each coupled to the inserting member 24 by a clearance fit, and thus relatively small stress acts on each component. With this arrangement, relatively great tensile stress does not act on each stator iron core 211 of the stator units 21A to 21C, which is formed of the powder magnetic core, unlike a case in which the stator iron cores 211 are coupled to the inserting member 24 by an interference fit. Therefore, a situation where each stator iron core 211 that is formed of the powder magnetic core gets damaged is suppressed.

In the second embodiment, the U-V interphase member 22A, and the V-W interphase member 22B may be omitted. The same configuration is applied to the third embodiment described below.

As described above, the inner peripheral surfaces of the stator units 21A to 21C (stator iron cores 211) face the outer peripheral surface of the inserting member 24. An object 28 is provided at a clearance between the inner peripheral surface of each of the stator units 21A to 21C (stator iron cores 211), the U-V interphase member 22A, the V-W interphase member 22B, and the end member 23, and the outer peripheral surface of the inserting member 24, in a manner in which the object 28 is interposed between the above components and is in contact with the components.

The object 28 is formed of a material in which stress acting, in the radial direction, between the object and each stator iron core 211 is very small, in a state in which the object is in contact with both the inner peripheral surface of the stator iron core 211 and the outer peripheral surface of the inserting member 24. With this arrangement, tensile stress to act in the radial direction on the stator iron core 211 is mitigated, and thus a situation where each stator iron core 211 that is formed of the powder magnetic core gets damaged can be suppressed.

For example, the object 28 is an annular elastic resin in an axial view, and the resin is provided on the outer peripheral surface of the inserting member 24. The object 28 may also be, for example, grease that is applied to the outer peripheral surface of the inserting member 24. The object 28 may also be, for example, an adhesive that is applied to the outer peripheral surface of the inserting member 24 and is capable of bonding the outer peripheral surface of the inserting member 24 to the inner peripheral surfaces of the stator units 21A to 21C, the U-V interphase member 22A, the V-W interphase member 22B, and the end member 23. With this arrangement, thermal energy generated through the windings 212 of the stator units 21A to 21C is transferred to the inserting member 24 through the object 28. The inserting member 24 transfers the thermal energy to the fixing member 30 in the axial direction, and then the thermal energy transferred to the fixing member 30 is dissipated externally in the axial direction, through the heat dissipation member 40 that is provided on the fixing member 30. Therefore, cooling performance of the motor 1 can be improved.

Also, as described above, the inner peripheral surfaces of all of the stator units 21A to 21C face the outer peripheral surface of the inserting member 24 in the radial direction, and thus thermal energy from all of the stator units 21A to 21C can be efficiently transferred to the inserting member 24. In particular, thermal energy from the stator unit 21B of the V-phase, which is located at the middle portion of the stator units 21A to 21C, is relatively hard to escape externally in many cases. Therefore, when the inserting member 24 is arranged so as to face, in the radial direction, the stator unit 21B that is in a middle phase of the multiple phases and is located in the middle portion of the stator units 21A to 21C in the axial direction, cooling performance of the motor 1 can be further improved accordingly.

The object 28 may also be, for example, resin, grease, an adhesive, or the like, where the resin includes one or more thermally conductive fillers having relatively high thermal conductivity. With this arrangement, thermal energy is more efficiently transferred from the stator iron core 211 to the inserting member 24. Therefore, cooling performance of the motor 1 can be further improved.

### [Third embodiment]

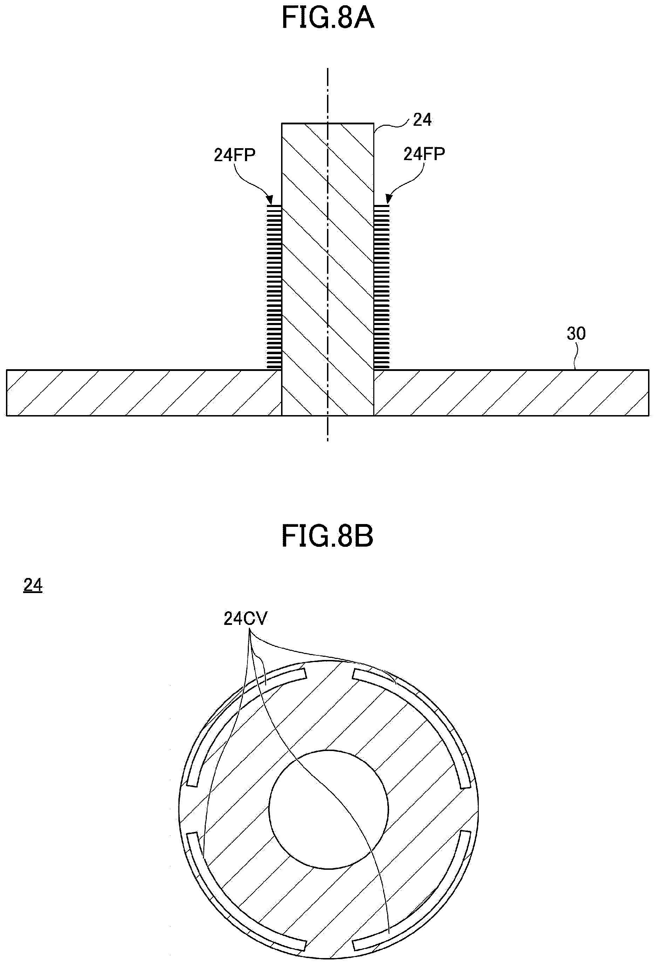

A third embodiment will be described below with reference to Figs. 8A and 8B. In the following description, portions that differ from those described in the first embodiment and second embodiment will be mainly described, and accordingly, the description for configurations that are the same or corresponding configurations as those described in at least one of the first embodiment or the second embodiment may be omitted.

As in the first embodiment and the second embodiment, the basic configuration of the motor 1 is illustrated in Figs. 1 to 3, and the description thereof is omitted.

### <Detailed configuration of motor>

Fig. 8A is a longitudinal cross-sectional view of an example of the configuration of the inserting member 24 according to the third embodiment. Fig. 8B is a cross-sectional view of another example of the configuration of the inserting member 24 according to the third embodiment.

As in that in Fig. 7 illustrated in the second embodiment, the longitudinal cross-sectional view of the configuration of the motor 1 according to the third embodiment is illustrated, except that the object 28, and the clearance between the stator iron core 211 of each of the stator units 21A to 21C and the inserting member 24 are omitted. Accordingly, illustration thereof is omitted, and description will be provided by incorporating the illustration into Figs. 8A and 8B.

As illustrated in Fig. 8A, micro protrusions 24FP are formed on the outer peripheral surface of the inserting member 24, in an area in which the stator units 21A to 21C are disposed in the axial direction. For example, a large number of micro grooves are formed on the outer peripheral surface of the inserting member 24 in the circumferential direction, so as to encircle the inserting member once. With this arrangement, peak portions where grooves are not formed may be formed as the micro protrusions 24FP.

A tip of each micro protrusion 24FP is formed such that a minimum allowable dimension thereof is greater than a maximum allowable dimension of the inner surface of an insertion hole 211D in the stator iron core 211. Therefore, fixing of the inserting member 24 (micro protrusions 24FP) to the stator iron core 211 is enabled as in an interference fit.

In contrast, strength in each micro protrusion 24FP is relatively weak and the micro protrusion is likely to deform in comparison to the stator iron core 211. With this arrangement, when the inserting member 24 is inserted through the insertion hole 211D of the stator iron core 211, the micro protrusions 24FP deform relatively greatly in comparison to the stator iron core 211, while contacting the inner surface of the insertion hole 211D. Therefore, even though the stator iron cores 211 and the inserting member 24 are coupled together by an interference fit, stress acting between the inserting member 24 (micro protrusions 24FP) and the stator iron cores 211 is relatively small. With this arrangement, tensile stress to act radially on the stator iron cores 211 that are each formed of the powder magnetic core can be suppressed, and thus a situation where the stator iron cores 211 become damaged can be suppressed.

Further, the inner surface of the insertion hole 211D in each stator iron core 211 is in contact with the micro protrusions 24FP that are in a state of deforming relatively greatly. With this arrangement, thermal energy generated through the windings 212 of the stator units 21A to 21C is transferred from the stator iron cores 211 to a main body of the inserting member 24, through the micro protrusions 24FP. The inserting member 24 axially transmits the thermal energy to the fixing member 30, and thus heat energy that is transferred to the fixing member 30 is dissipated externally in the axial direction through the heat dissipation member 40 that is provided on the fixing member 30. Therefore, cooling performance of the motor 1 can be improved.

Further, as illustrated in Fig. 8B, cutout portions 24CV are provided proximal to the outer peripheral surface of the inserting member 24 so as to extend axially. The cutout portions 24CV are provided in the axial direction of the inserting member, in an area in which at least the stator units 21A to 21C are disposed.

In this example, the outer circumferential surface of the inserting member 24 is formed such that a minimum allowable dimension of the outer circumferential surface is greater than a maximum allowable dimension of the interior surface of the insertion hole 211D in the stator iron cores 211. With this arrangement, fitting of the inserting member 24 with the stator iron cores 211 is performed as in a case of an interference fit.

Cutout portions 24CV are provided proximal to the outer peripheral surface of the inserting member 24. With this arrangement, strength in the inserting member 24 is relatively weak in comparison to a case of the stator iron core 211, and thus the inserting member 24 is likely to deform. Thus, when the inserting member 24 is inserted through the insertion hole 211D of the stator iron core 211, the outer peripheral surface of the inserting member 24 deforms relatively in comparison to the stator iron core 211, while contacting the inner surface of the insertion hole 211D. With this arrangement, even when the stator iron core 211 and the inserting member 24 are coupled to each other by an interference fit, stress acting between the inserting member 24 and the stator iron core 211 is relatively small. Thus, tensile stress acting radially on the stator iron cores 211 that are each formed of the powder magnetic core is suppressed, and thus a situation where the stator iron cores 211 become damaged can be suppressed.

The inner surface of the insertion hole 211D of each stator iron core 211 contacts the outer peripheral surface of the inserting member 24 that is in a state of being deformed relatively greatly. With this arrangement, thermal energy generated through the windings 212 of the stator units 21A to 21C is transferred from the stator iron cores 211 to the inserting member 24. The inserting member 24 transfers the thermal energy to the fixing member 30 in the axial direction, and thus the thermal energy that is transferred to the fixing member 30 is dissipated externally through the heat dissipation member 40, in the axial direction, that is provided on the fixing member 30. Therefore, cooling performance of the motor 1 can be improved.

### [Other embodiments]

The configurations of the first embodiment to third embodiment described above may be suitably combined.

For example, the configuration of the U-V interphase member 22A, the V-W interphase member 22B, and the end member 23, as described in the first embodiment, may be applied to each of the second embodiment and third embodiment. With this arrangement, cooling performance of the motor 1 can be further improved.

### [Action]

The action of the motor 1 according to the present embodiment will be described below.

In the present embodiment, each stator iron core 211 is formed of the powder magnetic core. The inserting member 24 is disposed so as to face the inner surface (which is an example of a wall surface) of the insertion hole 211D in the stator iron cores 211 and is configured to transfer heat in the axial direction. The heat dissipation member 40 is configured to transfer the heat from the inserting member 24 in the axial direction. The fixing member 30 fixes the stator iron cores 211 and the inserting member 24. Also, stress generated between each stator iron core 211 and the inserting member 24 is less than each of stress generated between the stator iron core 211 and the fixing member 30, and stress generated between the inserting member 24 and the fixing member 30. The inserting member 24 and the stator iron core 211 are each configured to enable the heat to be transferred.

Thus, for example, by a clearance fit or the like, a clearance is formed between each stator iron core 211 and the inserting member 24. Even when stress generated between the stator iron core 211 and the inserting member 24 is relatively small, heat can escape from the stator iron cores 211 to be transferred toward the inserting member 24. Therefore, heat generated through the stator iron cores 211 that is formed of the powder magnetic core is dissipated from the heat dissipation member 40 via the inserting member 24. Thus, cooling performance of the motor 1 including the stator iron cores 211 that are each formed of the powder magnetic core can be improved.

In particular, when the motor 1 that is an outer rotor type is used, the stator 20 including windings 212 is relatively disposed inside the motor 1 in the radial direction, and thus heat is likely to build up inside the motor 1. Therefore, the configuration of the present embodiment is more suitable for the motor 1 that is an outer rotor type.

The inserting member 24 may be disposed to face at least a portion of the inner surface of the insertion hole 211D in the stator iron cores 211 in the axial direction. Instead of or in addition to the inserting member 24, another member (axial heat-transfer member) capable of transferring heat in the axial direction may be provided. For example, when another axial heat-transfer member is inserted, in the axial direction, through an insertion hole that is provided through the stator units 21A to 21C, the U-V interphase member 22A, the V-W interphase member 22B, and the end member 23, the another axial heat-transfer member may be fixed to the fixing member 30, where the insertion hole is disposed at any location other than the location proximal to the rotation axis AX of the motor 1.

In the present embodiment (first embodiment and second embodiment), one or more objects (for example, in the first embodiment, the U-V interphase member 22A, the V-W interphase member 22B, and the end member 23; in the second embodiment, the object 28) that are capable of transferring heat may be provided between the inserting member 24 and stator iron cores 211.

With this arrangement, in the motor 1, thermal energy can be transferred from each stator iron core 211 to the inserting member 24, through a given object between the stator iron core 211 and the inserting member 24.

In the present embodiment (first embodiment), the U-V interphase member 22A, the V-W interphase member 22B, and the end member 23 are each disposed to transfer heat from a given stator iron core 211 in the axial direction, by contact with at least one end surface of the given stator iron core 211 in the axial direction. The U-V interphase member 22A, the V-W interphase member 22B, and the end member 23 may each transfer heat from the stator iron core 211, toward the inserting member 24.

With this arrangement, in the motor 1, thermal energy can be transferred from the respective stator iron cores 211 to the inserting member 24 through the U-V interphase member 22A, the V-W interphase member 22B, and the end member 23, which are each in contact with the end surface of a given stator iron core 211.

One or more members among the U-V interphase member 22A, the V-W interphase member 22B, and the end member 23 may be each configured such that heat is not transferred to the inserting member 24. In this case, for example, one or more members among the U-V interphase member 22A, the V-W interphase member 22B, and end member 23 may be coupled to the inserting member 24 by a clearance fit, or alternatively, the one or more members may be each configured so as not to come into contact with the stator iron core 211.

In the present embodiment (first embodiment), the U-V interphase member 22A, the V-W interphase member 22B, and the end member 23 may be each formed of a non-magnetic body.

With this arrangement, each of the U-V interphase member 22A, the V-W interphase member 22B, and the end member 23 can have both a function of transferring thermal energy generated through a given stator iron core 211, to the inserting member 24; and a function of suppressing magnetic flux leakage from a given stator iron cores 211. Thus, it is not necessary to provide dedicated members corresponding to respective functions. Therefore, an increased size and increased cost of the motor 1 can be suppressed.

When one or more members among the U-V interphase member 22A, the V-W interphase member 22B, and the end member 23 are not non-magnetic bodies, it is sufficient.

In the present embodiment (second embodiment), resin, an adhesive, or grease may be provided in a clearance between each of the stator iron cores 211 and the inserting member 24 that face each other.

With this arrangement, in the motor 1, thermal energy generated through each stator iron core 211 can be transferred to the inserting member 24, through the resin, the adhesive, or the grease.

In the present embodiment (second embodiment), resin, an adhesive, or grease may include one or more thermally conductive fillers.

With this arrangement, in the motor 1, thermal energy generated through each stator iron core 211 can be more efficiently transferred to the inserting member 24, with the resin, the adhesive, or the grease. Therefore, cooling performance of the motor 1 can be further improved.

In the present embodiment (third embodiment), the inserting member 24 may be configured such that heat transfer can be performed by contact with each stator iron core 211, in a state in which the inserting member 24 deforms relatively greatly in comparison to a case in which the stator iron core 211 deforms.

With this arrangement, in the motor 1, even when fitting of the inserting member 24 with the stator iron cores 211 is performed by an interference fit, the inserting member 24 can come into contact with the stator iron cores 211, in a state in which the inserting member 24 is relatively deformed greatly in comparison to the stator iron cores. Thus, the motor 1 can transfer thermal energy generated through the stator iron cores 211, to the inserting member 24, while preventing a situation where the powder magnetic core gets damaged by tensile stress that acts between the stator iron cores and the inserting member 24.

In the present embodiment (each of the first embodiment, the second embodiment, and the third embodiment), driving may be performed in accordance with armature currents of a plurality of phases (two or more phases).

With this arrangement, even when the motor 1 has a relatively large amount of heat that is generated in accordance with the armature currents of phases that flow, cooling performance of the motor 1 can be appropriately secured, and reductions in performance or the like of the motor 1 can be suppressed.

### [Modifications and changes]

Although the embodiments have been described, it would be understood that various modifications to manners and details may be made without departing from the spirit and scope set forth in the claims.

For example, a configuration in which heat can be transferred between each stator iron core 211 and a given axial heat-transfer member (e.g., inserting member 24), as described in the embodiments, may be applied to a motor (e.g., radial motors) of a type other than a claw motor that includes one or more stator iron cores that are each formed of a powder magnetic core.

Also, the configuration in which heat can be transferred between each stator iron core 211 and a given axial heat-transfer member, as described in the embodiments and modification, may be applied to an inner rotor-type motor that includes one or more stator iron cores that are each formed of a powder magnetic core. In this case, an axial heat-transfer member may be, for example, a motor housing that is disposed farther outward than one or more stator iron cores in a radial direction.

Also, a configuration in which heat can be transferred between each stator iron core and an axial heat-transfer member, as described in the embodiments and modifications, may be applied between a rotor iron core, which is formed of a powder magnetic core, and a given axial heat-transfer member.

This application claims priority under Japanese Patent Application No. 2019-181000, filed September 30, 2019, the entire contents of which are hereby incorporated by reference.

### [Description of Reference Symbols]

1 claw pole motor (motor)
10 rotor
11, 11A to 11C rotor iron core
12 permanent magnet
13 rotary shaft member
14 coupling member
20 stator
21, 21A to 21C stator unit
22 interphase member
22A U-V interphase member (object)
22B V-W interphase member (object)
23 end member (object)
24 inserting member (axial heat-transfer member)
28 object
30 fixing member
40 heat dissipation member
211 stator iron core (iron core)
211A yoke
211B claw magnetic pole
211C yoke
211D through-hole
212 winding

## Claims

1. A motor comprising:
an iron core formed of a powder magnetic core;
an axial heat-transfer member disposed so as to face at least a portion of a wall surface of the iron core, the axial heat-transfer member being configured to enable heat to be transferred in an axial direction;
a heat dissipation member configured to enable the heat from the axial heat-transfer member to be transferred in the axial direction; and
a fixing member that fixes the iron core and the axial heat-transfer member,
wherein stress generated between the iron core and the axial heat-transfer member is less than each of stress generated between the iron core and the fixing member, and stress generated between the axial heat-transfer member and the fixing member, and
wherein each of the axial heat-transfer member and the iron core is configured to enable the heat to be transferred.

2. The motor according to claim 1, further comprising an object provided between the axial heat-transfer member and the iron core, the object being configured to enable the heat to be transferred.

3. The motor according to claim 2, wherein the object contacts at least one end surface of the iron core in the axial direction and is disposed to enable the heat from the iron core to be transferred in the axial direction, the object being configured to transfer the heat from the iron core to the axial heat-transfer member.

4. The motor according to claim 2 or 3, wherein the object is formed of a non-magnetic body.

5. The motor according to claim 2, wherein the object is resin, an adhesive, or grease that is provided in a space between the iron core and the axial heat-transfer member that face each other.

6. The motor according to claim 5, wherein the resin, the adhesive, or the grease includes a thermally conductive filler.

7. The motor according to claim 1, wherein the axial heat-transfer member is configured to enable the heat to be transferred by contact with the iron core, in a state in which the axial heat-transfer member deforms relatively greatly in comparison with the iron core that deforms.

8. The motor according to any one of claims 1 to 7, wherein the motor is configured to be driven in accordance with armature currents of a plurality of phases.
